# EUROPÄISCHE PATENTSCHRIFT

(11) **EP 2 795 774 B1**
(45) Veröffentlichungstag und Bekanntmachung des Hinweises auf die Patenterteilung: **08.06.2016**
(21) Anmeldenummer: 12815662.7
(22) Anmeldetag: 18.12.2012
(51) Int. Cl.: H02K 15/095

(54) **VERFAHREN UND VORRICHTUNG ZUR HERSTELLUNG VON BEWICKELTEN UND MITEINANDER VERSCHALTETEN POLZÄHNEN VON STATOREN**
METHOD AND DEVICE FOR PRODUCING STATOR POLE TEETH THAT ARE WOUND AND CONNECTED TO ONE ANOTHER
PROCÉDÉ ET DISPOSITIF DE FABRICATION DE DENTS POLAIRES DE STATORS MUNIES D'UN ENROULEMENT ET CONNECTÉES LES UNES AUX AUTRES

(30) Priorität: 20.12.2011 DE 102011089238
(43) Veröffentlichungstag der Anmeldung: 29.10.2014
(73) Patentinhaber: Continental Automotive GmbH, 30165 Hannover (DE)
(72) Erfinder: SCHEIN, Uwe, 34260 Kaufungen (DE)
(86) Internationale Anmeldenummer: PCT/EP2012/075929
(87) Internationale Veröffentlichungsnummer: WO 2013/092572

(56) Entgegenhaltungen:
- EP-A2- 2 372 878
- WO-A2-2009/106273
- WO-A2-2011/052936
- JP-A- 2000 217 315
- JP-A- 2003 061 320
- US-A1- 2007 182 265

## Beschreibung

Die vorliegende Erfindung betrifft ein Verfahren zur Herstellung von bewickelten und miteinander verschalteten Polzähnen von Statoren mit den folgenden Schritten:
- Anordnen der zu bewickelnden Polzähne in Form einer Reihe;
- Bewickeln von einem Polzahn oder mehreren Polzähnen der Reihe;
- Herausführen des Wickeldrahtes oder der Wickeldrähte aus dem Wickelraum der Polzähne zur Außenseite derselben in einen einseitig durch Isolationskörper der Polzähne begrenzten Verlegeraum und
- Verlegen des Wickeldrahtes oder der Wickeldrähte im Verlegeraum zum Verschalten einzelner Polzähne miteinander.

EP 2 372 878 A2 zeigt ein Verfahren zur Herstellung von bewickelten und miteinander verschalteten Polzähnen.

Bei der Herstellung von Statoren müssen die einzelnen Polzähne der Statoren bewickelt und nach dem Bewickeln durch Verbinden der Wickeldrähte einzelner Polzähne miteinander verschaltet werden. Es ist dabei bekannt, die einzelnen Polzähne in einer Reihe anzuordnen und den durch Isolationskörper begrenzten Wickelraum der Polzähne mit Draht zu bewickeln, wobei vorzugsweise eine Mehrnadeltechnik Anwendung findet, bei der mehrere Polzähne mit jeweils einer Nadel gleichzeitig bewickelt werden. Nach dem Bewickeln der einzelnen Polzähne, d. h. des entsprechenden Blechpaketes zwischen den Isolationskörpern der Polzähne, werden die Drähte aus dem Wickelraum der Polzähne herausgeführt und außerhalb der Wickelräume verlegt, um entsprechende Polzähne miteinander zu verschalten. Beispielsweise werden hierbei der erste und dritte Polzahn, der zweite und vierte Polzahn etc. der Reihe verschaltet.

Hierbei ist es wichtig, einen parallelen Drahtverlauf ohne Kreuzungen der einzelnen Verlegedrähte zu erreichen, um eine Vergrößerung des Außendurchmessers der Polzahnreihe zu vermeiden. Eine derartige Durchmesservergrößerung hat man jedoch bisher in Kauf genommen. Aufgrund der variierenden axialen Höhen der Drahtein- und -auslaufpositionen am Wickelkörper ist man bisher davon ausgegangen, dass das Erreichen eines parallelen Drahtverlaufes ohne Kreuzungen ohne eine extrem bauraumfordernde Zusatzgeometrie am Wickelkörper nicht möglich ist.

Der Erfindung liegt die Aufgabe zugrunde, ein Verfahren der eingangs beschriebenen Art zur Verfügung zu stellen, mit dem sich Polzähne von Statoren besonders sicher und bauraumsparend bewickeln und verschalten lassen.

Diese Aufgabe wird erfindungsgemäß bei einem Verfahren der angegebenen Art dadurch gelöst, dass der Verlegeraum beim Verlegen des Wickeldrahtes oder der Wickeldrähte temporär so verengt wird, dass eine automatische axiale Stapelung der Wickeldrähte im Verlegeraum unter Vermeidung von Drahtverkreuzungen erzwungen wird.

Die Erfindung geht von dem Grundgedanken aus, während der Außenverlegung des Wickeldrahtes oder der Wickeldrähte zum Verschalten von einzelnen Polzähnen den für den Wickeldraht bzw. die Wickeldrähte zur Verfügung stehenden Verlegeraum zu verengen und dadurch eine axiale Stapelung der Drähte zu erzwingen und Drahtverkreuzungen zu verhindern. Durch das temporäre Verengen des Verlegeraumes beim Verlegen des Drahtes bzw. der Drähte wird der Draht automatisch in seine Verlegeposition gezwungen, wobei mehrere Drähte parallel zueinander in Axiallage gestapelt bzw. übereinander angeordnet werden. Mit "axial" ist hierbei gemeint, dass die Drähte in Richtung der Längsachse des Stators bzw. Polzahnes durch die Verlegeraumverengung übereinander angeordnet werden.

Erfindungsgemäß wird somit der Draht im Wickelprozess beim Verschalten zwischen den Einzelpolen in seine vorgesehene Position gezwungen, wobei Drahtkreuzungen unterbunden werden und eine Stapelung der einzelnen Verlegedrähte bewirkt wird. Auf diese Weise wird eine Bauraumverringerung erreicht, da die Verlegedrähte bzw. Verschaltungsdrähte übereinander (gestapelt) angeordnet werden.

Es versteht sich, dass bei dem erfindungsgemäßen Verfahren der Verlegeraum während des Verlegens des Drahtes bzw. der Drähte nur temporär verengt wird, so dass das Herausführen des Drahtes aus dem Wickelraum der Polzähne und/oder das Hereinführen des Drahtes in den Wickelraum durch die Verlegeraumverengung nicht behindert wird. Ist beispielsweise ein Polzahn fertig bewickelt, wird der Draht durch den Isolationskörper nach außen in den Verlegeraum geführt. Es erfolgt dann eine temporäre Verengung des Verlegeraumes, so dass sich die axiale Stapelung der Drähte ergibt. Ist diese erfolgt, wird der Verlegeraum wieder erweitert, um weitere Verfahrensschritte nicht zu behindern. Die Verengung des Verlegeraumes wird dabei an den Stellen durchgeführt, an denen eine Drahtverlegung (Verschaltung zwischen einzelnen Polen) stattfindet.

Bei dem erfindungsgemäßen Verfahren wird die Verengung des Verlegeraumes vorzugsweise durch das Bewegen von Begrenzungsschiebern realisiert, die den Verlegeraum auf der anderen Seite begrenzen. Wie erwähnt, ist der Verlegeraum auf der einen Seite durch die Isolationskörper der Polzähne der Reihe begrenzt. Die diesen Isolationskörpern gegenüberliegende Seite des Verlegeraumes wird erfindungsgemäß durch die Begrenzungsschieber variabel gehalten, so dass auf diese Weise eine örtlich und zeitlich begrenzte Raumverengung durchgeführt werden kann. Hierbei werden die Begrenzungsschieber unabhängig voneinander variabel vor- und zurückbewegt. Vorzugsweise ist dabei jedem Polzahn der Reihe ein Begrenzungsschieber zugeordnet, so dass sich der Verlegeraum jedes Polzahnes variieren, d. h. verengen oder erweitern, lässt.

Wie erwähnt, findet das erfindungsgemäße Verfahren insbesondere beim Einsatz einer Mehrnadeltechnik Verwendung, bei der mehrere Polzähne einer Reihe gleichzeitig mit mehreren Nadeln bewickelt und gleichzeitig verlegt bzw. verschaltet werden. Gerade bei einem derartigen Verfahren kommt es darauf an, Verlegedrähte bzw. Verschaltungsdrähte so übereinander zu lagern bzw. zu stapeln, dass sich keine Drahtkreuzungen ergeben.

Die Erfindung betrifft ferner eine Vorrichtung zur Herstellung von bewickelten und miteinander verschalteten Polzähnen von Statoren mit einer Aufnahmeeinrichtung zur Lagerung der zu bewickelnden Polzähne in Form einer Reihe und einer Nadeleinrichtung zum Bewickeln der Polzähne und zum Verlegen der Wickeldrähte zwischen Polzähnen in einem Verlegeraum.

Diese Vorrichtung ist erfindungsgemäß dadurch gekennzeichnet, dass sie eine Einrichtung zur temporären Verengung des Verlegeraumes des Wickeldrahtes aufweist.

Hierdurch wird eine automatische axiale Stapelung der Wickeldrähte im Verlegeraum erreicht, und Drahtverkreuzungen werden vermieden.

Die Einrichtung zur temporären Verengung des Verlegeraumes umfasst vorzugsweise eine Vielzahl von Bewegungsschiebern, wobei insbesondere jedem Polzahn der Reihe ein Bewegungsschieber zugeordnet ist. Die Bewegungsschieber sind dabei unabhängig voneinander variabel vor- und zurückbewegbar, so dass auf zeitlich und örtlich begrenzte Weise der Verlegeraum eines jeden Polzahnes in seiner Breite variiert werden kann. Durch Heranschieben des Begrenzungsschiebers in Richtung auf den Isolationskörper des zugehörigen Polzahnes wird der Verlegeraum für den Draht verengt, und mehrere Verlegedrähte, die sich in diesem Raum befinden, werden übereinander angeordnet bzw. gestapelt.

Die Erfindung wird nachfolgend anhand eines Ausführungsbeispieles in Verbindung mit der Zeichnung im Einzelnen erläutert. Es zeigen:
- Figur 1: zwei schematische Draufsichten und Vorderansichten einer Vorrichtung zur Herstellung von bewickelten und miteinander verschalteten Polzähnen von Statoren und
- Figur 2: eine schematische Seitenansicht der Vorrichtung der Figur 1.

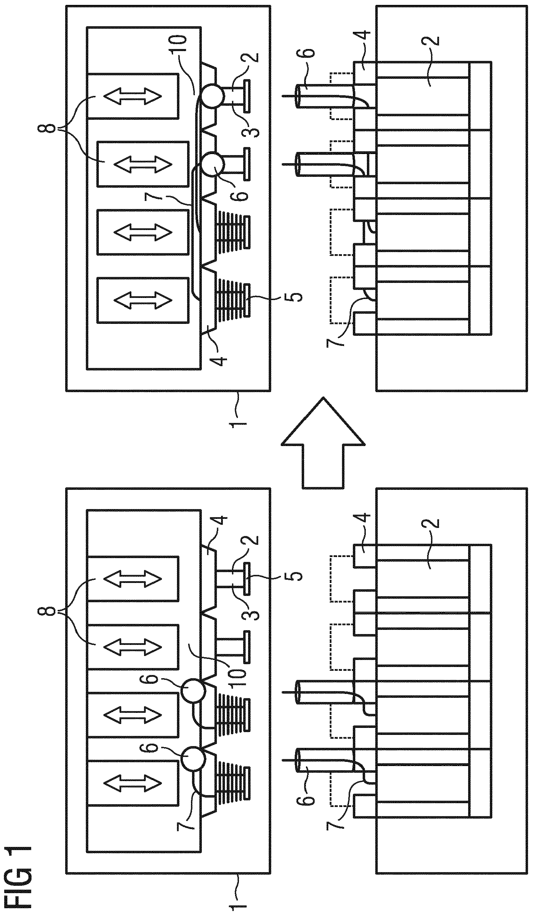

Die in den Figuren dargestellte Vorrichtung besitzt eine Polzahnaufnahme 1, in der vier Polzähne 2 in einer Reihe zum Bewickeln und Verschalten angeordnet sind. Die Polzähne 2 weisen jeweils zwei Isolationskörper 4, 5 und einen dazwischen angeordneten Wickelraum 3 auf. In den Abbildungen der Figur 1 sind die beiden linken Polzähne im bewickelten Zustand dargestellt, während die beiden rechten Polzähne noch nicht bewickelt sind.

Das Bewickeln der Polzähne wird mittels Mehrnadeltechnik durchgeführt, bei der im vorliegenden Fall zwei Polzähne gleichzeitig mit je einer Nadel bzw. Wickeldüse 6 bewickelt werden.

Die beiden linken Darstellungen der Figur 1 zeigen die Vorrichtung nach Beendigung des Wickelvorganges der beiden linken Polzähne in einem Zustand, in dem die beiden Wickeldrähte 7 durch den Isolationskörper 4 aus dem Wickelraum 3 des jeweiligen Polzahnes in einen Verlegeraum herausgeführt worden sind. Die jeweiligen Wickeldrahtenden werden jetzt zwischen den einzelnen Polzähnen verschaltet, wobei die Wickeldrähte 7 im Verlegeraum verlegt und wieder durch die Isolationskörper 4 in die Wickelräume 3 der nächsten Polzähne 2 hereingeführt werden. Dabei wird der erste Polzahn von links mit dem dritten Polzahn von links verschaltet, und der zweite Polzahn von links wird mit dem vierten Polzahn von links verschaltet.

Die rechten Abbildungen von Figur 1 zeigen den Zustand während des Verlegens bzw. Verschaltens. Der zur Verfügung stehende Verlegeraum 10 wird dabei auf der einen Seite durch die jeweiligen Isolationskörper 4 der Polzähne 2 begrenzt, während die gegenüberliegende Begrenzung von Begrenzungsschiebern 8 gebildet wird, von denen jeweils ein Schieber 8 einem Polzahn 2 zugeordnet ist. Diese Begrenzungsschieber 8 werden beim Verlegen der Drähte 7 temporär in Richtung auf die Isolationskörper 4 bewegt, so dass der Verlegeraum 10 in diesem Bereich verengt wird. Hierdurch werden die Verlegedrähte übereinander angeordnet (gestapelt), so dass sich keine Verkreuzungen der Verlegedrähte ergeben. In den rechten Abbildungen der Figur 1 sind die drei linken Begrenzungsschieber 8 alle in Richtung auf die Isolationskörper 4 der Polzähne 2 bewegt worden, so dass sich ein verengter Verlegeraum 10 ergibt, während der rechte Begrenzungsschieber 8 in seiner Ausgangsstellung dargestellt ist, in der der Verlegeraum 10 nicht verengt ist. In dieser Stellung kann beispielsweise der Wickeldraht wieder durch den Isolationskörper 4 in den Wickelraum 3 hineingeführt werden. Der dritte Schieber 8 von links befindet sich hierbei in einer Stellung, in der der Wickeldraht 7 gerade in den Verlegeraum 10 eingeführt worden ist und mit der Verengung des Verlegeraumes 10 begonnen wird.

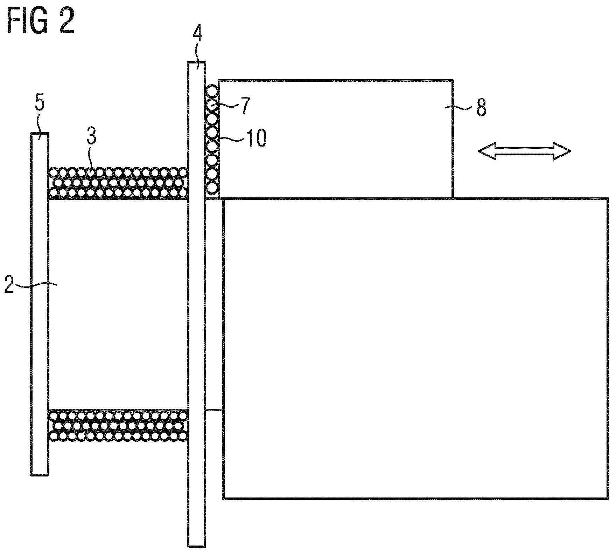

Figur 2 zeigt die Vorrichtung in einer vergrößerten Seitenansicht. Man erkennt einen Polzahn 2 mit zwei Isolationskörpern 4, 5. Ein Verlegeraum 10 zum äußeren Verlegen des Wickeldrahtes 7 ist im durch einen Begrenzungsschieber 8 verengten Zustand dargestellt, so dass die entsprechenden, zu Verschaltungszwecken verlegten Wickeldrähte 7 übereinander angeordnet sind und sich auf diese Weise keine überkreuzenden Verlegedrähte ergeben.

## Patentansprüche

1. Verfahren zur Herstellung von bewickelten und miteinander verschalteten Polzähnen von Statoren mit den folgenden Schritten:
- Anordnen der zu bewickelnden Polzähne in Form einer Reihe;
- Bewickeln von einem Polzahn oder mehreren Polzähnen der Reihe;
- Herausführen des Wickeldrahtes oder der Wickeldrähte aus dem Wickelraum der Polzähne zur Außenseite derselben in einen einseitig durch Isolationskörper der Polzähne begrenzten Verlegeraum und
- Verlegen des Wickeldrahtes oder der Wickeldrähte im Verlegeraum zum Verschalten einzelner Polzähne miteinander,
**dadurch gekennzeichnet, dass** der Verlegeraum beim Verlegen des Wickeldrahtes oder der Wickeldrähte temporär so verengt wird, dass eine automatische axiale Stapelung der Wickeldrähte im Verlegeraum unter Vermeidung von Drahtverkreuzungen erzwungen wird.

2. Verfahren nach Anspruch 1, **dadurch gekenn- zeichnet,** dass die Verengung des Verlegeraumes durch das Bewegen von Begrenzungsschiebern realisiert wird, die den Verlegeraum auf der anderen Seite begrenzen.

3. Verfahren nach Anspruch 2, **dadurch gekenn- zeichnet,** dass die Begrenzungsschieber unabhängig voneinander variabel vor- und zurückbewegt werden.

4. Verfahren nach einem der vorangehenden Ansprüche, **dadurch gekennzeichnet, dass** mehrere Polzähne der Reihe gleichzeitig mit mehreren Nadeln bewickelt und gleichzeitig verlegt werden.

5. Vorrichtung zur Herstellung von bewickelten und miteinander verschalteten Polzähnen von Statoren mit einer Aufnahmeeinrichtung zur Lagerung der zu bewickelnden Polzähne in Form einer Reihe und einer Nadeleinrichtung zum Bewickeln der Polzähne und zum Verlegen der Wickeldrähte zwischen Polzähnen in einem Verlegeraum, d a - **durch gekennzeichnet,** dass sie eine Einrichtung zur temporären Verengung des Verlegeraumes (10) des Wickeldrahtes (7) aufweist.

6. Vorrichtung nach Anspruch 5, **dadurch ge- kennzeichnet,** dass die Einrichtung zur temporären Verengung des Verlegeraumes (10) eine Vielzahl von Begrenzungsschiebern (8) besitzt.

7. Vorrichtung nach Anspruch 5 oder 6, **dadurch gekennzeichnet, dass** jedem Polzahn (2) der Reihe ein Begrenzungsschieber (8) zugeordnet ist.

## Claims

1. Method for producing stator pole teeth that are wound and connected to one another, comprising the following steps:
- arranging the pole teeth that are to be wound in the form of a row;
- winding one pole tooth or several pole teeth of the row;
- routing the winding wire or the winding wires out of the winding space in the pole teeth to the outside of said pole teeth into a laying space which is bounded on one side by insulation bodies of the pole teeth; and
- laying the winding wire or the winding wires in the laying space in order to connect individual pole teeth to one another, **characterized in that**, during laying of the winding wire or of the winding wires, the laying space is temporarily constricted such that the winding wires are forcibly automatically axially stacked in the laying space so as to avoid wire crossovers.

2. Method according to Claim 1, **characterized in that** the laying space is constricted by moving bounding slides which bound the laying space on the other side.

3. Method according to Claim 2, **characterized in that** the bounding slides are moved forward and backward in a variable manner independently of one another.

4. Method according to one of the preceding claims, **characterized in that** a plurality of pole teeth of the row are simultaneously wound using several needles and are simultaneously laid.

5. Device for producing stator pole teeth that are wound and connected to one another, comprising a receiving device for supporting the pole teeth that are to be wound in the form of a row, and comprising a needle device for winding the pole teeth and for laying the winding wires between pole teeth in a laying space, **characterized in that** said device has a device for temporarily constricting the laying space (10) of the winding wire (7).

6. Device according to Claim 5, **characterized in that** the device for temporarily constricting the laying space (10) has a large number of bounding slides (8).

7. Device according to Claim 5 or 6, **characterized in that** a bounding slide (8) is associated with each pole tooth (2) of the row.

## Revendications

1. Procédé de fabrication de dents polaires de stators, dotées d'enroulements et raccordées les unes aux autres, le procédé présentant les étapes suivantes :
disposer en rangées les dents polaires dotées d'enroulements,
doter d'un enroulement une dent polaire ou plusieurs dents polaires de la rangée,
extraire le fil d'enroulement ou les fils d'enroulement de l'espace d'enroulement des dents polaires vers l'extérieur de ces derniers, dans un espace de placement délimité d'un côté par des corps d'isolation des dents polaires,
placer le fil d'enroulement ou les fils d'enroulement dans l'espace de placement pour raccorder les différentes dents polaires les unes aux autres,
**caractérisé en ce que**
lors du placement du fil d'enroulement ou des fils d'enroulement, l'espace de placement est rétréci temporairement de manière à forcer un empilement axial automatique des fils d'enroulement dans l'espace de placement tout en évitant des croisements des fils.

2. Procédé selon la revendication 1, **caractérisé en ce que** le rétrécissement de l'espace de placement est réalisé par déplacement de poussoirs de limitation qui limitent l'espace de placement sur l'autre côté.

3. Procédé selon la revendication 2, **caractérisé en ce que** les poussoirs de limitation peuvent être avancés et reculés de manière variable indépendamment les uns des autres.

4. Procédé selon l'une des revendications précédentes, **caractérisé en ce que** plusieurs dents polaires de la rangée sont enroulées simultanément par plusieurs aiguilles et en même temps déplacées.

5. Ensemble de fabrication de dents polaires de stators, dotées d'enroulements et raccordées les unes aux autres, présentant un dispositif de réception qui reprend en rangée les dents polaires à doter d'un enroulement, un dispositif d'aiguille qui pose des enroulements autour des dents polaires et un espace de placement,
**caractérisé en ce que**
il présente un dispositif de rétrécissement temporaire de l'espace de placement (10) du fil d'enroulement (7).

6. Ensemble selon la revendication 5, **caractérisé en ce que** le dispositif de rétrécissement temporaire de l'espace de placement (10) possède plusieurs poussoirs de limitation (8).

7. Ensemble selon les revendications 5 ou 6, **caractérisé en ce qu'**un poussoir de limitation (8) est associé à chaque dent polaire (2) de la rangée.
